# EUROPÄISCHE PATENTSCHRIFT

(11) **EP 2 482 573 B1**
(45) Veröffentlichungstag und Bekanntmachung des Hinweises auf die Patenterteilung: **19.04.2017**
(21) Anmeldenummer: 12150431.0
(22) Anmeldetag: 09.01.2012
(51) Int. Cl.: H04W 8/24

(54) **Verfahren zum Konfigurieren eines Kommunikationsgerätes sowie Kommunikationsgerät**
Method for configuring a communication device and communication device
Procédé de configuration d'un appareil de communication ainsi qu'appareil de configuration

(30) Priorität: 26.01.2011 DE 102011009486
(43) Veröffentlichungstag der Anmeldung: 01.08.2012
(73) Patentinhaber: Vodafone GmbH, 40549 Düsseldorf (DE)
(72) Erfinder: Fischer, Jens, 64297 Darmstadt (DE)
(74) Vertreter: Müller & Schubert

(56) Entgegenhaltungen:
- EP-A1- 1 529 374
- EP-A1- 1 655 926
- WO-A2-02/19617
- KOTULIAK I ET AL: "Provisioning of VoIP Services for Mobile Subscribers Using WiFi Access Network", CONVERGENCE INFORMATION TECHNOLOGY, 2007. INTERNATIONAL CONFERENCE ON, IEEE, PISCATAWAY, NJ, USA, 21. November 2007 (2007-11-21), Seiten 1957-1962, XP031225482, ISBN: 978-0-7695-3038-3

## Beschreibung

Die vorliegende Erfindung betrifft ein Verfahren zum Konfigurieren eines Kommunikationsgerätes gemäß dem Oberbegriff von Patentanspruch 1. Weiterhin betrifft die Erfindung auch ein Kommunikationsgerät gemäß dem Oberbegriff von Patentanspruch 5.

Für die Verwendung von Kommunikationsgeräten, wie beispielsweise Mobiltelefonen, Festnetztelefonen oder Datenverarbeitungsanlagen ist häufig eine Konfiguration des Kommunikationsgerätes erforderlich. Diese Konfiguration kann dabei auf vielfältige Art und Weise erfolgen.

So wird beispielsweise in der EP 1748661 B1 beschrieben, wie netzbetreiberabhängige Konfigurationen eines mobilen Kommunikationsgerätes über einen Konfigurationsserver geladen werden können. Dafür wird auf der Subscriber Identity Module (SIM) Karte ein Parameter für den Netzbetreiber gespeichert. Über ein Kommunikationsmodul im Kommunikationsgerät wird zunächst eine Datenverbindung zu einem Konfigurationsserver aufgebaut, um dann netzbetreiberspezifische Konfigurationen vom Konfigurationsserver laden zu können.

In der US 2008009318 A1 wird beschrieben wie userspezifische Konfigurationen wie beispielsweise General Packet Radio Service (GPRS), Short Message Services (SMS), Multimedia Messaging Service (MMS) Einstellungen, sowie Klingeltöne, Hintergrundbilder, Tastenbelegungen, Menüeinstellungen oder Homepagelinks von einem Konfigurationsserver geladen werden können. Dafür weist das Kommunikationsgerät ein Kontrollmodul auf, in dem der empfangene Netzbetreiber identifiziert wird und dann eine dazu passende Konfiguration vom Konfigurationsserver geladen werden kann.

In der EP 1 529 374 A1 ist beschrieben, dass ein mobiler IP-Node, der beispielsweise ein Mobiltelefon sein kann, mittels einer auf einer SIM-Karte des mobilen IP-Nodes gespeicherten IMSI authentifiziert wird. Damit wird es ermöglicht, dass sich ein Benutzer problemlos zwischen verschiedenen Hot Spots bewegen kann.

In dem Aufsatz "Provisioning of VoIP Services for Mobile Subscribers using WiFi Access Network" (Convergence Information technology, 2007, International Conference On, IEEE, Piscataway, Seiten 1957-1962, ISBN: 978-0-7695-3038-3) wird eine Architektur beschrieben, die es 2G Nutzern ermöglicht, via WiFi ein SIP basiertes VoIP-Netzwerk zu benutzen. Die Authentifizierung erfolgt dabei über die SIM.

In der WO 02/19617 A2 wird ein Verfahren zum Durchführen eines Datenaustauschs beschrieben. Dabei sollen verschiedene Systeme miteinander kompatibel gemacht werden.

In der EP 1 655 926 A1 wird eine Lösung zum Provisionieren eines mobilen Kommunikationsgeräts offenbart. Dazu wird an das Kommunikationsgerät eine entsprechende Anfrage geschickt. Diese Anfrage enthält als Identifikationsmerkmale eine persönliche Informationsnummer und eine Geräteidentifikationsnummer. Die Anfrage wird an einen Registrierungsserver geschickt. Dort wird eine Session-ID erzeugt, die auf den Identifikationsmerkmalen beruht. Die Session-ID wird danach mit einer URL assoziiert. Die mit der URL assoziierte Session-ID wird anschließend an das Kommunikationsgerät zurück übertragen und von dort an einen Webbrowser geschickt, der eine entsprechende Webseite in Gang setzt.

Die Konfiguration von Kommunikationsgeräten kann aber auch derart erfolgen, dass ein Kunde einen individuellen Zahlencode für die Konfiguration oder Installation des Kommunikationsgeräts erhält. Dieser individuelle Zahlencode ermöglicht, dass das Netz das Kommunikationsgerät des Kunden erkennt, um das Kommunikationsgerät zu konfigurieren.

Vereinfacht ausgedrückt, erhält der Kunde, beispielsweise bei Festnetzanschlüssen, einen individuellen Zahlencode, einen sogenannten Modem-Installationscode für die Konfiguration beziehungsweise Installation. Dieser Zahlencode ermöglicht es dem Netz den Kunden zu erkennen und dem Digital Subscriber Line (DSL) Modem aus dem Netz remote die individuellen DSL und Voice over IP (VoIP) Zugangsdaten von einem Auto-Configuration Server (ACS) zu provisionieren.

Im Festnetz ist es bereits seit einigen Jahren üblich VoIP Technologie für Telefonie einzusetzen. Die genutzten Kommunikationsgeräte (DSL / VoIP Modems) benötigen dafür jedoch einige kundenindividuelle Konfigurationsdaten wie beispielsweise einen VoIP Account, ein VoIP Passwort, einen VoIP Proxy, eine Rufnummer und bei DSL Anschlüssen zusätzlich noch den DSL Zugangsaccount mit Passwort. Um dem Endkunden die Konfiguration dieser Kommunikationsgeräte leicht zu machen, benutzt man sogenannte ACS (Auto-Configuration Server), die genau diese individuelle Konfiguration auf das Kommunikationsgerät konfigurieren. Der ACS muss dafür jedoch das Kommunikationsgerät diesem Kunden eindeutig zuordnen können.

Dafür gibt es im Festnetz bereits Lösungen. Beispielsweise meldet bei Verbindungsaufbau in das Netz das Netz von welcher physikalischen Anschlussleitung die Anfrage beziehungsweise der Request kommt. Eine andere Lösung sieht vor, dass sich der Kunde durch Eingabe eines eindeutigen, individuellen und geheimen Schlüssels, beispielsweise eines Zahlencodes, identifiziert. Dieser individuelle Zahlencode wird üblicherweise per Brief an den Kunden versendet oder ist auf einer Hardware, beispielsweise einem Universal Serial Bus (USB) Speicherstick dauerhaft gespeichert.

Nachteilig bei den vorgenannten Lösungen ist jedoch, dass wenn ein Kunde ein Kommunikationsgerät unmittelbar nach dem Kauf, wie es bei der Long Term Evolution (LTE) Mobilfunktechnologie beispielsweise möglich ist, verwenden möchte, die Versendung eines solchen individuellen Zahlencodes beispielsweise per Post zu lange dauert und eine sofortige Inbetriebnahme des Kommunikationsgeräts nicht möglich ist.

Außerdem sind zur Konfiguration weiterer Kommunikationsendgeräte eines Kunden zusätzliche Identifikationsschlüssel erforderlich, wobei die Zuordnung der Identifikationsschlüssel zu den jeweiligen Kommunikationsgeräten verwirrend sein kann.

Der vorliegenden Erfindung liegt von daher die Aufgabe zugrunde, ein Verfahren sowie ein Kommunikationsgerät bereitzustellen, mit dem die Konfiguration des Kommunikationsgerätes optimiert werden kann.

Diese Aufgabe wird erfindungsgemäß gelöst durch das Verfahren mit den Merkmalen gemäß des unabhängigen Patentanspruchs 1, sowie das Kommunikationsgerät mit den Merkmalen gemäß des unabhängigen Patentanspruchs 5. Weitere Merkmale und Details der Erfindung ergeben sich aus den Unteransprüchen, der Beschreibung sowie den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Kommunikationsgerät, und umgekehrt, so dass hinsichtlich der Offenbarung zwischen den einzelnen Erfindungsaspekten wechselseitig vollinhaltlich aufeinander Bezug genommen und verwiesen wird.

Gemäß des ersten Aspekts der Erfindung wird ein Verfahren zum Konfigurieren eines Kommunikationsgerätes bereitgestellt, um bestimmte Anpassungen des Kommunikationsgerätes vorzunehmen, Das Verfahren ist durch folgende Schritte gekennzeichnet:
eine Kommunikationsverbindung wird von dem Kommunikationsgerät zu einer externen Konfigurationsrechnereinheit hergestellt;
Identifikationsdaten, die auf das Kommunikationsgerät bezogen sind, werden zum Zwecke der Authentifizierung des Kommunikationsgeräts von dem Kommunikationsgerät an die externe Konfigurationsrechnereinheit übertragen, wobei als Identifikationsdaten chipkartenbezogene Identifikationsmerkmale übertragen werden, wobei die chipkartenbezogenen Identifikationsmerkmale einer Chipkarte zu deren Identifikation zugeordnet sind, wobei die Chipkarte dem Kommunikationsgerät zugeordnet ist, wobei die Chipkarte als eine SIM-Karte ausgebildet ist, wobei der Chipkarte als chipkartenbezogenes Identifikationsmerkmal eine International Mobile Subscriber Identification zugeordnet ist, wobei der Chipkarte als chipkartenbezogenes Identifikationsmerkmal eine chipkartenbezogene PIN, insbesondere eine SuperPIN, zugeordnet ist, und wobei die International Mobile Subscriber Identification und die chipkartenbezogene PIN als Identifikationsdaten in Form von zwei unterschiedlichen chipkartenbezogenen Identifikationsmerkmalen von dem Kommunikationsgerät an die externe Konfigurationsrechnereinheit übertragen werden;
in der externen Konfigurationsrechnereinheit werden die übertragenen Identifikationsdaten authentifiziert, indem zur Authentifizierung die übertragenen Identifikationsdaten mit gespeicherten Identifikationsdaten verglichen werden, indem geprüft wird, inwieweit die übertragenen Identifikationsdaten den gespeicherten Identifikationsdaten entsprechen, wobei die gespeicherten Identifikationsdaten mit Konfigurationsdaten, welche in der Konfigurationsrechnereinheit abgespeichert sind, verknüpft sind;
bei erfolgreicher Authentifizierung wird eine Konfiguration des Kommunikationsgeräts durchgeführt, derart, dass bei Übereinstimmung der übertragenen Identifikationsdaten mit den gespeicherten Identifikationsdaten die den gespeicherten Identifikationsdaten zugeordneten Konfigurationsdaten von der externen Konfigurationsrechnereinheit automatisch zu dem Kommunikationsgerät übertragen, dort empfangen und auf dem Kommunikationsgerät konfiguriert werden.

Unter Konfigurieren beziehungsweise Konfiguration wird verstanden, dass bestimmte Anpassungen beziehungsweise Einstellungen von Programmen und Software oder Hardwarebestandteilen eines Kommunikationsgerätes vorgenommen werden. Durch diese Konfiguration kann das Kommunikationsgerät an ein vorhandenes System angepasst werden oder in ein vorhandenes System integriert werden, so dass das Kommunikationsgerät Bestandteil des Systems ist und in diesem verwendet werden kann. Die Anpassung kann dabei derart erfolgen, dass Parameter gemäß den Erfordernissen des Systems eingestellt werden.

Als Synonym für den Begriff Konfiguration kann auch der Begriff Installation verwendet werden, so dass die vorliegende Erfindung nicht auf den Begriff der Konfiguration oder Installation beschränkt ist.

Erfindungsgemäß soll die Konfiguration bei einem Kommunikationsgerät erfolgen. Bei einem Kommunikationsgerät handelt es sich beispielsweise um eine technische Anlage oder Einrichtung, die zur Erfassung, Eingabe, Übermittlung und Ausgabe von Informationen oder Signalen oder Daten dient. Im weiteren Verlauf wird der Begriff Information als Synonym für Informationen oder Signalen oder Daten oder dergleichen verwendet. Die Informationen, welche übermittelt werden sollen, können beispielsweise Sprachdaten sein, wobei die vorliegende Erfindung nicht auf bestimmte Arten von Informationen beschränkt ist.

Bei einem Kommunikationsgerät kann es sich um stationär, also lokal beschränkt verwendete Geräte, wie ein Festnetztelefon, ein Faxgerät, einen Personal Computer, eine Servereinrichtung, ein Internetrouter oder ein Internetmodem oder dergleichen handeln. Ein Kommunikationsgerät kann aber auch ein mobiles Gerät sein, wie beispielsweise ein Mobiltelefon, ein tragbarer Computer, ein Netbook, ein Notebook, ein Navigationsgerät, ein Personal Digital Assistant oder dergleichen. Die vorliegende Erfindung ist somit nicht auf ein bestimmtes Kommunikationsgerät beschränkt.

Die Konfiguration des Kommunikationsgeräts erfolgt erfindungsgemäß derart, dass zunächst eine Kommunikationsverbindung von dem Kommunikationsgerät zu einer externen Konfigurationsrechnereinheit herstellt wird.

Dies kann beispielsweise über eine Schnittstelle erfolgen. Bei einer Schnittstelle, die auch als Interface bezeichnet werden kann, handelt es sich um einen Teil eines Systems, welcher für die Kommunikation, also den Austausch von Informationen oder Daten zwischen zwei Kommunikationsbeteiligten verwendet wird. Über eine Schnittstelle kann ein Austausch von Daten oder Signalen stattfinden, wobei es sich bei dem Austausch beispielsweise um ein Senden oder Empfangen von Daten handeln kann. Der Austausch kann zudem so erfolgen, dass ein Kommunikationsbeteiligter Informationen oder Daten bei einem anderen Kommunikationsbeteiligten aktiv anfragt oder passiv zugesendet bekommt. Ebenso kann eine Schnittstelle auf vielfältige Art und Weise ausgestaltet sein. Die vorliegende Erfindung ist nicht auf bestimmte Schnittstellen oder Ausgestaltungen von Schnittstellen beschränkt.

Bei einer Kommunikationsverbindung handelt es sich insbesondere um eine Verbindung zwischen mindestens zwei Kommunikationsteilnehmern, so dass ein Austausch von Informationen oder Signalen oder Daten möglich ist. Die Kommunikationsverbindung kann dabei drahtgebunden oder drahtlos oder als eine Kombination von drahtgebunden und drahtlos erfolgen. Beispielsweise kann vorgesehen sein, dass eine Kommunikationsverbindung bis zu einer Verteilerstelle drahtgebunden und von der Verteilerstelle aus drahtlos erfolgt.

Bei den Kommunikationsteilnehmern kann es sich um jede Art von Teilnehmern handeln und die vorliegende Erfindung ist nicht auf bestimmte Kommunikationsteilnehmer beschränkt. So kann es sich bei einem Kommunikationsteilnehmer beispielsweise um eine Person oder um eine technische Anlage handeln. Einer Person ist dabei ein Kommunikationsgerät zugeordnet, wobei der Prozess der Kommunikation über das Kommunikationsgerät erfolgt. Bei einer technischen Anlage muss diese Anlage entsprechend ausgestaltet sein. Es sind auch Kombinationen von Kommunikationsteilnehmern denkbar. So kann beispielsweise eine Person eine Kommunikation mit einer technischen Anlage führen, wobei bevorzugt ist, dass die Kommunikationsverbindung wechselseitig zwischen zwei technischen Anlagen, beispielsweise zwischen einem Kommunikationsgerät und einer externen Konfigurationsrechnereinheit erfolgt.

Bei der externen Konfigurationsrechnereinheit handelt es sich vorzugsweise um eine lokal von dem Kommunikationsgerät getrennte technische Anlage, in der Informationen beziehungsweise Daten für die Konfiguration des Kommunikationsgerätes hinterlegt sind. Beispielsweise kann es sich bei der externen Konfigurationsrechnereinheit um einen Auto-Configuration Server (ACS) handeln.

Als Identifikationsdaten, werden insbesondere alle Daten oder Informationen verstanden, mit der das Kommunikationsgerät beziehungsweise ein Nutzer des Kommunikationsgeräts identifiziert werden kann. Die Identifikationsdaten können dabei beispielsweise aus Zahlen oder Buchstaben bestehen, wobei die vorliegende Erfindung nicht auf diese Art der Identifikationsdaten beschränkt ist. Auf Möglichkeiten der Ausgestaltung der Identifikationsdaten wird im weiteren Verlauf der Beschreibung detailliert eingegangen.

Die Identifikationsdaten werden erfindungsgemäß von dem Kommunikationsgerät zu der externen Konfigurationsrechnereinheit zum Zwecke der Authentifizierung des Kommunikationsgeräts übertragen, also um das Kommunikationsgerät bei der externen Konfigurationsrechnereinheit zu authentifizieren.

Bei einer Authentifizierung wird im Allgemeinen der Nachweis, also eine Verifizierung, einer behaupteten Eigenschaft einer Partei, die beispielsweise ein Mensch, ein Gerät, ein Dokument oder eine Information sein kann, verstanden.

Die eine Authentifizierung abschließende Bestätigung wird auch als Autorisierung bezeichnet und bezüglich der behaupteten Eigenschaft, die beispielsweise bestehende Zugangsberechtigung oder Echtheit sein kann, gilt die authentifizierte Partei dann als authentisch.

Somit stellt die Authentifizierung vorzugsweise einen Prozess dar, bei dem die Identität einer Person oder Sache durch eine Kontrollstelle überprüft wird. Für diese Überprüfung können beispielsweise übertragene Identifikationsdaten mit gespeicherten Identifikationsdaten verglichen werden. Sofern die übertragenen Identifikationsdaten mit den gespeicherten Identifikationsdaten übereinstimmen, so ist die Authentifizierung erfolgreich. Nach einer Authentifizierung kann ein weiterer Prozess beispielsweise eine Übertragung von Konfigurationsdaten erfolgen.

Übertragen wird im Sinne der vorliegenden Erfindung insbesondere derart verstanden, dass Informationen oder Signale oder Daten von dem Kommunikationsgerät, welches der erste Kommunikationsteilnehmer sein kann, zu der externen Konfigurationsrechnereinheit, welche der zweite Kommunikationsteilnehmer sein kann, transportiert werden kann. Die Übertragung kann selbstverständlich auch in umgekehrter Richtung oder wechselseitig erfolgen.

Erfindungsgemäß werden als Identifikationsdaten chipkartenbezogene Identifikationsmerkmale übertragen. Die chipkartenbezogenen Identifikationsmerkmale sind auf eine Chipkarte bezogen. Die chipkartenbezogenen Identifikationsmerkmale ermöglichen es, die Chipkarte eindeutig zu identifizieren, und damit auch den Nutzer, dem diese Chipkarte zugeordnet ist. Diese chipkartenbezogenen Identifikationsmerkmale können beispielsweise ein Identifikationscode beispielsweise in Form einer Identifikationsnummer oder dergleichen sein, wobei die vorliegende Erfindung nicht auf spezielle Identifikationsmerkmale beschränkt ist. Vielmehr können als Identifikationsmerkmale alle Informationen oder Daten verstanden werden, mittels derer eine Identifikation der Chipkarte möglich ist.

Die Chipkarte, der die chipkartenbezogenen Identifikationsmerkmale zugeordnet sind, kann beispielsweise in Form einer Smartcard oder Integrated Circuit Card (ICC) ausgebildet sein. Bei einer Chipkarte handelt es sich vorzugsweise um eine Karte mit eingebautem integriertem Schaltkreis, dem sogenannten Chip, der eine Hardware-Logik, Speicher oder auch einen Mikroprozessor enthalten kann. Anders als beispielsweise Speichergeräte, wie USB-Sticks, CDs, DVDs, Disketten oder dergleichen, dienen Chipkarte im Allgemeinen nicht dazu große Datenmengen zu speichern. Auch können im Allgemeinen die Daten, die auf einer Chipkarte gespeichert sind, von normalen Benutzern der Chipkarte, nicht verändert werden. Unter normalen Benutzern wird im Sinne der vorliegenden Erfindung der Nutzer verstanden, der die Chipkarte lediglich benutzt ohne mit der Technik in Gänze vertraut zu sein oder diese im Detail zu kennen.

Bei einer Identifikation handelt es sich gemäß der vorliegenden Erfindung um ein Synonym für Identifizierung. Es kann darunter der Vorgang verstanden werden, der zum eindeutigen Erkennen einer Person oder eines Objekts dient beziehungsweise führt. Eine Identifikation beziehungsweise eine Identifizierung erfolgt im Allgemeinen anhand kennzeichnender Merkmale oder mit Hilfe eines Identifikators. Beispielsweise kann vorgesehen sein, dass die Chipkarte und/oder das Kommunikationsgerät anhand von chipartenbezogenen Identifikationsmerkmalen identifiziert werden.
Hat auf Basis der Identifikationsdaten eine Authentifizierung erfolgreich stattgefunden, beispielsweise wie oben bereits erläutert, kann in einem nächsten Schritt die Konfiguration des Kommunikationsgeräts erfolgen.

Die Konfiguration kann beispielsweise derart erfolgen, dass zunächst Identifikationsdaten zum Authentifizieren des Kommunikationsgerätes an die externe Konfigurationsrechnereinheit übertragen werden. Daran angeschlossen können Konfigurationsdaten von der externen Konfigurationsrechnereinheit an das Kommunikationsgerät übertragen und dort empfangen werden. Bei den Konfigurationsdaten kann es sich insbesondere um Daten mit denen das Kommunikationsgerät derart konfiguriert werden kann, handeln, damit das Kommunikationsgerät funktioniert.

Funktionieren kann im Sinne der vorliegenden Erfindung insbesondere derart verstanden werden, dass das Kommunikationsgerät verwendet werden kann. So kann das Kommunikationsgerät beispielsweise in einem Kommunikationsnetz oder Kommunikationsnetzwerk oder IP-Netzwerk verwendet werden.

Das Empfangen der Konfigurationsdaten durch das Kommunikationsgerät kann beispielsweise über eine Schnittstelle erfolgen. Bei dieser Schnittstelle kann es sich um die, wie weiter oben bereits erwähnte Schnittstelle, oder eine davon unterschiedliche, also eine zweite Schnittstelle handeln.

Bevorzugt werden die übertragenen Identifikationsdaten in der externen Konfigurationsrechnereinheit authentifiziert. Im Gegensatz zu dem Verfahren gemäß dem ersten Aspekt ist nunmehr auch die externe Konfigurationsrechnereinheit Bestandteil des Verfahrens. Die Identifikationsdaten werden zum Zwecke der Authentifizierung des Kommunikationsgeräts an diese externe Konfigurationsrechnereinheit übertragen. Erfindungsgemäß werden in der externen Konfigurationsrechnereinheit die übertragenen Identifikationsdaten authentifiziert.

Bei einer Authentifizierung wird im Allgemeinen der Nachweis, also eine Verifizierung, einer behaupteten Eigenschaft einer Partei, die beispielsweise ein Mensch, ein Gerät, ein Dokument oder eine Information sein kann, verstanden.

Die eine Authentifizierung abschließende Bestätigung wird auch als Autorisierung bezeichnet und bezüglich der behaupteten Eigenschaft, die beispielsweise bestehende Zugangsberechtigung oder Echtheit sein kann, gilt die authentifizierte Partei dann als authentisch.

Somit stellt die Authentifizierung vorzugsweise einen Prozess dar, bei dem die Identität einer Person oder Sache durch eine Kontrollstelle überprüft wird. Für diese Überprüfung werden beispielsweise übertragene Identifikationsdaten mit gespeicherten Identifikationsdaten verglichen. Sofern die übertragenen Identifikationsdaten mit den gespeicherten Identifikationsdaten übereinstimmen, so ist die Authentifizierung erfolgreich. Nach einer Authentifizierung kann somit ein weiterer Prozess beispielsweise eine Übertragung von Konfigurationsdaten erfolgen.

Nachdem die Authentifizierung in der externen Konfigurationsrechnereinheit erfolgreich war, erfolgt erfindungsgemäß die Konfiguration des Kommunikationsgeräts. Dies kann auf unterschiedliche Weise geschehen, wie weiter unten in größerem Detail erläutert wird.

Das erfindungsgemäße Verfahren dient insbesondere dazu, dass ein Kommunikationsgerät, in dem sich eine Chipkarte befindet, bei einer externen Konfigurationsrechnereinheit zu authentifizieren, indem zum Zwecke der Authentifizierung auf Informationsmerkmale zurückgegriffen wird, die sich auf der Chipkarte befinden und zur Identifikation der Chipkarte dienen.

Erfindungsgemäß werden als Identifikationsdaten zwei unterschiedliche chipkartenbezogene Identifikationsmerkmale übertragen. Bei den chipkartenbezogenen Identifikationsmerkmalen handelt es sich um die chipkartenbezogenen Identifikationsmerkmale, wie sie weiter oben bereits beschrieben worden sind und auf die an dieser Stelle vollinhaltlich verwiesen wird.

Sofern zwei unterschiedliche chipkartenbezogenen Identifikationsmerkmale übertragen werden sollen, so sind diese nicht gleich. Dabei ist die Erfindung nicht auf bestimmte Typen von Informationsmerkmalen beschränkt. Dies ist vor allem im Hinblick auf Sicherheitsaspekte von Vorteil, da durch die Übertragung und somit Verifikation durch mehrere unterschiedlicher chipkartenbezogener Identifikationsmerkmale der Zugang für nicht berechtigte Benutzer deutlich erschwert wird.

In weiterer Ausgestaltung ist das Verfahren zum Konfigurieren eines Kommunikationsgeräts in Form eines Mobiltelefons, insbesondere eines LTE-Mobiltelefons ausgebildet.

Bei einem LTE-Mobiltelefon handelt es sich vorzugsweise um ein Mobiltelefon, welches für den Mobilfunkstandard Long Term Evolution (LTE) geeignet ist, welcher auch als 4G Standard bezeichnet werden kann. Dabei ist selbstverständlich nicht gemeint, dass ein LTE-Mobiltelefon nur den Mobilfunkstandard LTE bedient. Es ist auch vorgesehen, dass ein LTE-Mobiltelefon neben dem LTE-Mobilfunkstandard auch für andere Mobilfunkstandards wie beispielsweise Universal Mobile Telecommunications System (UMTS) oder Global System for Mobile Communications (GSM) verwendet werden kann.

Im Gegensatz zu GSM (2G) und UMTS (3G) besitzt die Mobilfunktechnologie LTE (4G) kein separierten Sprachkanal für Telefonie mehr. Stattdessen wird nur noch ein InternetProtokoll (IP)-Datenkanal zur Verfügung gestellt der es erforderlich macht VoIP Technologie zum Telefonieren zu verwenden. Damit wird es auch notwendig mehrere Dateneinträge zum Telefonieren auf dem Kommunikationsgerät zu konfigurieren. Bei diesen Dateneinträgen handelt es sich mindestens um VoIP Account und VoIP Passwort.

In anderer Ausgestaltung ist das Verfahren zum Konfigurieren eines Kommunikationsgeräts in Form eines Festnetzgerätes, insbesondere eines DSL-oder VoIP-Geräts ausgebildet. Es kann auch zum Konfigurieren eines Kommunikationsgeräts für den VoIP-Betrieb ausgebildet sein.

Bei einem Festnetzgerät handelt es sich um ein Gerät, welches vorzugsweise lokal begrenzt eingesetzt wird. Ein Beispiel für ein Festnetzgerät ist ein klassisches Telefon, welches über einen Festnetzanschluss in einer Wohnung oder einem Haus verwendet wird, wobei die vorliegende Erfindung nicht auf bestimmte Arten von Festnetzgeräten beschränkt ist. Bei dem Festnetzgerät kann es sich vorzugsweise um ein DSL- oder VoIP-Gerät handeln. Ein solches DSL- oder VoIP-Gerät kann beispielsweise ein Modem oder ein Router sein.

Ebenso ist vorzugsweise vorgesehen, dass das Verfahren zum Konfigurieren eines Kommunikationsgeräts für den VoIP-Betrieb ausgebildet ist. Unter dem VoIP-Betrieb wird im Sinne der Erfindung verstanden, dass eine Kommunikation zwischen zwei Kommunikationsteilnehmern, wobei es sich bei den Kommunikationsteilnehmern um Personen oder technische Anlagen handeln kann, über die VoIP-Technologie erfolgt.

Unter VoIP kann das Telefonieren über Computernetzwerke, welche nach Internet-Standards aufgebaut sind, verstanden werden. Dabei können für die Telefonie typische Informationen, wie beispielsweise Sprache und Steuerinformationen beispielsweise für den Verbindungsaufbau, über ein, auch für Datenübertragung nutzbares Netz, übertragen werden. Bei den Gesprächsteilnehmern können sowohl Computer, auf IP-Telefonie spezialisierte Kommunikationsgeräte, als auch über spezielle Adapter angeschlossene klassische Telefone die Verbindung herstellen.

In weiterer Ausgestaltung kann das Kommunikationsgerät eine Schnittstelle zur Herstellung einer Kommunikationsverbindung in Form einer Datenverbindung zwischen dem Kommunikationsgerät und einer externen Konfigurationsrechnereinheit aufweisen. Alternativ kann eine Kommunikationsverbindung in Form einer Datenverbindung zwischen dem Kommunikationsgerät und einer externen Konfigurationsrechnereinheit hergestellt werden.

Bei einer Kommunikationsverbindung in Form einer Datenverbindung werden vorzugsweise Daten übertragen oder übermittelt.

Bei einer Schnittstelle, die auch als Interface bezeichnet werden kann, handelt es sich um einen Teil eines Systems, welcher für die Kommunikation, also den Austausch von Informationen oder Daten zwischen zwei Kommunikationsbeteiligten verwendet wird. Über eine Schnittstelle kann ein Austausch von Daten oder Signalen stattfinden, wobei es sich bei dem Austausch beispielsweise um ein Senden oder Empfangen von Daten handeln kann. Der Austausch kann zudem so erfolgen, dass ein Kommunikationsbeteiligter Informationen oder Daten bei einem anderen Kommunikationsbeteiligten aktiv anfragt oder passiv zugesendet bekommt. Ebenso kann eine Schnittstelle auf vielfältige Art und Weise ausgestaltet sein. Die vorliegende Erfindung ist nicht auf bestimmte Schnittstellen oder Ausgestaltungen von Schnittstellen beschränkt.

Über die Schnittstelle(n) und die Datenverbindung zwischen dem Kommunikationsgerät und der externen Konfigurationsrechnereinheit können Daten zum Zwecke der Authentifizierung des Kommunikationsgerätes vom Kommunikationsgerät an die externe Konfigurationsrechnereinheit übertragen beziehungsweise übermittelt werden. Von der externen Konfigurationsrechnereinheit können wiederum Konfigurationsdaten zur Konfiguration des Kommunikationsgeräts an das Kommunikationsgerät übertragen werden.

In weiterer Ausgestaltung ist vorgesehen, dass zur Authentifizierung in der externen Konfigurationsrechnereinheit die übertragenen Identifikationsdaten mit gespeicherten Identifikationsdaten verglichen werden, und dass bei Übereinstimmung der übertragenen Identifikationsdaten mit den gespeicherten Identifikationsdaten die Konfiguration des Kommunikationsgeräts durchgeführt wird.

Es werden folglich Identifikationsdaten des Kommunikationsgerätes an die externe Konfigurationsrechnereinheit übertragen, die im Folgenden auch als übertragene Identifikationsdaten bezeichnet werden. In der externen Konfigurationsrechnereinheit sind Identifikationsdaten gespeichert, die im Folgenden auch als gespeicherte Identifikationsdaten bezeichnet werden. Die gespeicherten Identifikationsdaten sind vorzugsweise von dem Telefonanbieter oder einem Dritten in der externen Konfigurationsrechnereinheit gespeichert beziehungsweise abgelegt. Es ist jedoch auch denkbar, dass die gespeicherten Identifikationsdaten in einer externen Speichereinrichtung abgelegt sind, und dass die externe Konfigurationsrechnereinheit während des Authentifizierungsprozesses auf diese Speichereinrichtung Zugriff nimmt.

Bei dem Vergleich der übertragenen Identifikationsdaten mit den gespeicherten Identifikationsdaten werden die übertragenen Identifikationsdaten mit den gespeicherten Identifikationsdaten verglichen, indem beispielsweise geprüft wird, inwieweit die übertragenen Identifikationsdaten den gespeicherten Identifikationsdaten entsprechen. Sofern die übertragenen Identifikationsdaten und die gespeicherten Identifikationsdaten übereinstimmen, erfolgt die Konfiguration des Kommunikationsgerätes.

Grundsätzlich kann die Konfiguration des Kommunikationsgerätes automatisch oder nach einer einmaligen Bestätigung erfolgen. Es kann aber auch sein, dass jeder Konfigurationsschritt von dem Nutzer einzeln bestätigt werden muss.

Die Konfiguration kann auf verschiedene Weise erfolgen. Beispielsweise sind den gespeicherten Identifikationsdaten Konfigurationsdaten für das Kommunikationsgerät zugeordnet. Bei Übereinstimmung der übertragenen Identifikationsdaten mit den gespeicherten Identifikationsdaten werden die den gespeicherten Identifikationsdaten zugeordneten Konfigurationsdaten automatisch an das Kommunikationsgerät übertragen. Zur Konfigurierung des Kommunikationsgerätes sind den, vorzugsweise in der externen Konfigurationsrechnereinheit, gespeicherten Identifikationsdaten Konfigurationsdaten zugeordnet. Die Konfigurationsdaten können dabei auch außerhalb von der externen Konfigurationsrechnereinheit vorliegen, wobei die externe Konfigurationsrechnereinheit auf diese Konfigurationsdaten zugreifen kann. Erfindungsgemäß sind die Konfigurationsdaten in der externen Konfigurationsrechnereinheit gespeichert.

In anderer Ausgestaltung kann vorgesehen sein, dass nach erfolgter Authentifizierung eine Kommunikation zwischen dem Kommunikationsgerät und der externen Konfigurationsrechnereinheit derart erfolgt, dass gerätetypische Daten oder Informationen vom Kommunikationsgerät an die externe Konfigurationsrechnereinheit übertragen oder von dieser abgefragt werden. Darauf basierend werden kann die erforderlichen Konfigurationsdaten übertragen.

Bevorzugt wird die Konfiguration des Kommunikationsgeräts durchgeführt, in dem nach erfolgter Authentifizierung Konfigurationsdaten von der externen Konfigurationsrechnereinheit zu dem Kommunikationsgerät übertragen werden. Wie bereits weiter oben aufgeführt, werden bei der Authentifizierung vorzugsweise übertragene Identifikationsdaten mit gespeicherten Identifikationsdaten verglichen. Sofern diese Daten übereinstimmen, das heißt, dass der Vergleich beziehungsweise die Authentifizierung erfolgreich waren, werden Konfigurationsdaten übertragen. Bei diesen Konfigurationsdaten handelt es sich vorzugsweise um Daten zur Konfiguration des Kommunikationsgerätes.

Die Übertragung der Konfigurationsdaten kann dabei automatisch erfolgen. Es kann aber auch so sein, dass die Übertragung der Konfigurationsdaten per remote erfolgt. Ebenso ist vorgesehen, dass die Übertragung der Konfigurationsdaten und eventuell die Konfiguration des Kommunikationsgeräts im Hintergrund abläuft, so dass der Nutzer des Kommunikationsgeräts davon nichts mitbekommt. Bevorzugt ist, dass die Konfigurationsdaten automatisch übertragen werden.

In weiterer Ausgestaltung werden zur Konfiguration des Kommunikationsgeräts VoIP-Zugangsdaten von der externen Konfigurationsrechnereinheit zu dem Kommunikationsgerät übertragen. Unter VoIP-Zugangsdaten werden insbesondere Zugangsdaten für die VoIP-Technologie verstanden. So kann das Kommunikationsgerät über VoIP-Technologie betrieben werden. Für einen solchen VoIP-Betrieb können spezielle Einstellungen an dem Kommunikationsgerät erforderlich sein. Die erforderlichen Einstellungen können vorzugsweise in den VoIP-Zugangsdaten von der externen Konfigurationsrechnereinheit zu dem Kommunikationsgerät übertragen werden.

In weiterer Ausgestaltung ist dem Kommunikationsgerät eine Chipkarte zugeordnet, auf der zur Identifikation der Chipkarte chipkartenbezogene Identifikationsmerkmale gespeichert sind. Zur Konfigurierung des Kommunikationsgerätes ist im Vorfeld eine Authentifizierung des Kommunikationsgeräts erforderlich. Bei dieser Ausführungsform erfolgt die Authentifizierung nicht anhand von Identifikationsdaten des Kommunikationsgerätes, sondern anhand von auf der Chipkarte gespeicherten Identifikationsmerkmalen.

In weiterer Ausgestaltung werden die chipkartenbezogenen Identifikationsmerkmale, die als Identifikationsdaten übertragen werden, vom Kommunikationsgerät aus der Chipkarte ausgelesen. Damit das Kommunikationsgerät die chipkartenbezogenen Identifikationsmerkmale der Chipkarte auslesen kann, muss das Kommunikationsgerät geeignet ausgebildet sein. Das Auslesen der Chipkarte kann auf verschiedene Art erfolgen und die vorliegende Erfindung ist nicht auf bestimmte Vorgehensweise für das Auslesen beschränkt. Vorzugsweise erfolgt das Auslesen der chipkartenbezogenen Identifikationsmerkmale in dem Kommunikationsgerät.

Erfindungsgemäß ist vorgesehen, dass der Chipkarte in Form einer SIM-Karte als chipkartenbezogenes Identifikationsmerkmal eine International Mobile Subscriber Identification zugeordnet ist, wobei die International Mobile Subscriber Identification als Identifikationsdaten von dem Kommunikationsgerät an die externe Konfigurationsrechnereinheit übertragen wird oder werden kann. Zusätzlich oder alternativ kann in weiterer Ausgestaltung der Chipkarte als chipkartenbezogenes Identifikationsmerkmal eine chipkartenbezogene PIN, insbesondere eine SuperPIN, zugeordnet sein, wobei die chipkartenbezogene PIN als Identifikationsdaten von dem Kommunikationsgerät an die externe Konfigurationsrechnereinheit übertragen wird oder werden kann.

Erfindungsgemäß ist die Chipkarte als SIM-Karte ausgebildet. Die SIM-Karte, welche auch als Subscriber Identity Module-Karte bezeichnet werden kann, ist vorzugsweise eine Chipkarte, wie sie bei Mobiltelefonen verwendet wird und zur Identifikation des Nutzers im Netz dient. Normalerweise stellen Mobilfunkanbieter mit der SIM-Karte Teilnehmern mobile Telefonanschlüsse und Datenanschlüsse zur Verfügung.

Bei Anschaltung über eine Mobilfunktechnologie erhält der Nutzer eine Subscriber Identity Module (SIM) Karte, über die der Nutzer eindeutig identifizierbar ist. Somit kann eine Standard SIM-Karte anstatt eines Zahlencodes für die Remote-Installation von VoIP Zugangsdaten genutzt werden.

Erfindungsgemäß ist auf der Chipkarte zu deren Identifikation eine International Mobile Subscriber Identification (IMSI) gespeichert, und die International Mobile Subscriber Identification wird oder kann als Identifikationsdaten von dem Kommunikationsgerät an die externe Konfigurationsrechnereinheit übertragen werden.

Bei der International Mobile Subscriber Identity (IMSI) handelt es sich um eine Nummer zum eindeutigen Identifizieren von Netzteilnehmern in Mobilfunknetzen. Neben weiteren Daten wird die IMSI vorzugsweise auf einer speziellen Chipkarte, dem so genannten SIM (Subscriber Identity Module), gespeichert. Dabei hat die IMSI nichts mit der Telefonnummer zu tun, die der SIM-Karte zugeordnet ist.

Die IMSI besteht aus 15 Ziffern und ist weltweit eindeutig einer SIM-Karte zuzuordnen, und setzt sich folgendermaßen zusammen:
- Mobile Country Code (MCC), 3 Ziffern
- Mobile Network Code (MNC), 2 (oder 3) Ziffern
- Mobile Subscriber Identification Number (MSIN), 10 Ziffern

Weiterhin ist erfindungsgemäß ein chipkartenbezogenes Identifikationsmerkmal eine chipkartenbezogene PIN. Die chipkartenbezogene PIN wird oder kann als Identifikationsdaten von dem Kommunikationsgerät an die externe Konfigurationsrechnereinheit übertragen werden.

Bei der PIN handelt es sich um eine Persönliche Identifikationsnummer oder Geheimzahl, die vorzugsweise nur einer Person bekannt ist. Mit der PIN kann sich der Nutzer eines Kommunikationsgeräts beispielsweise den Zugang in ein Kommunikationsnetz verschaffen.

Bei der SuperPIN, welche auch als PUK bezeichnet wird, handelt es sich um eine Identifikationsnummer, welche vorzugsweise zum Entsperren beispielsweise einer SIM-Karte dient. Die Nummer ist normalerweise nicht im Mobiltelefon gespeichert, sie ist an die SIM-Karte gebunden und ist nachträglich beim Hersteller zu ermitteln. Üblicherweise hat die SuperPIN (PUK) acht Ziffern.

Erfindungsgemäß kommt eine Kombination unterschiedlicher Typen von chipkartenbezogenen Identifikationsmerkmalen zum Einsatz. Erfindungsgemäß erfolgt die Identifizierung des Kommunikationsgeräts in einem solchen Fall durch die Übertragung mehrerer Identifikationsdateien, nämlich der IMSI und einer zusätzlichen Identifikationskennung. Als zusätzliche Identifikationskennung wird die PIN eines Mobiltelefons, und/oder die SuperPIN, welche auch als PUK (Personal Unblocking Key) bezeichnet wird, verwendet.

Erfindungsgemäß ist in einem solchen Fall vorgesehen, dass die Chipkarte als eine SIM-Karte ausgebildet ist, dass der Chipkarte als chipkartenbezogenes Identifikationsmerkmal eine International Mobile Subscriber Identification zugeordnet ist, dass der Chipkarte als chipkartenbezogenes Identifikationsmerkmal eine chipkartenbezogene PIN zugeordnet ist, und dass die International Mobile Subscriber Identification und die chipkartenbezogene PIN als Identifikationsdaten von dem Kommunikationsgerät an die externe Konfigurationsrechnereinheit übertragen werden oder werden können. Bei der Pin kann es sich, wie oben bereits erwähnt um jede PIN handeln, wobei vorzugsweise eine SuperPIN verwendet wird. Gemäß eines weiteren Aspekts der Erfindung wird ein Kommunikationsgerät bereitgestellt, aufweisend eine Schnittstelle zur Herstellung einer Kommunikationsverbindung von dem Kommunikationsgerät zu einer externen Konfigurationsrechnereinheit, aufweisend eine Schnittstelle zum Empfangen von Konfigurationsdaten von der externen Konfigurationsrechnereinheit, aufweisend Identifikationsdaten, die auf das Kommunikationsgerät bezogen sind und die über die Schnittstelle von dem Kommunikationsgerät an die externe Konfigurationsrechnereinheit übertragbar sind. Das Kommunikationsgerät ist dadurch gekennzeichnet, dass, dem Kommunikationsgerät eine Chipkarte zugeordnet ist, dass der Chipkarte zu deren Identifikation chipkartenbezogene Identifikationsmerkmale zugeordnet sind, dass das Kommunikationsgerät ausgebildet ist, dass chipkartenbezogene Identifikationsmerkmale als Identifikationsdaten von dem Kommunikationsgerät über die Schnittstelle an die externe Konfigurationsrechnereinheit übertragen werden, wobei die Chipkarte als eine SIM-Karte ausgebildet ist, wobei der Chipkarte als chipkartenbezogenes Identifikationsmerkmal eine International Mobile Subscriber Identification zugeordnet ist, wobei der Chipkarte als chipkartenbezogenes Identifikationsmerkmal eine chipkartenbezogene PIN, insbesondere eine SuperPIN, zugeordnet ist, und wobei die International Mobile Subscriber Identification und die chipkartenbezogene PIN als Identifikationsdaten in Form von zwei unterschiedlichen chipkartenbezogenen Identifikationsmerkmalen von dem Kommunikationsgerät an die externe Konfigurationsrechnereinheit übertragen werden, und dass die Schnittstelle zum Empfangen von Konfigurationsdaten, welche in der Konfigurationsrechnereinrichtung abgespeichert und mit in der Konfigurationsrechnereinrichtung gespeicherten Identifikationsdaten verknüpft sind, ausgebildet ist, derart, dass bei Übereinstimmung der übertragenen Identifikationsdaten mit den gespeicherten Identifikationsdaten die mit den gespeicherten Identifikationsdaten verknüpften Konfigurationsdaten von der externen Konfigurationsrechnereinheit automatisch zu dem Kommunikationsgerät übertragen, dort empfangen und auf dem Kommunikationsgerät konfiguriert werden.

Bei einem Kommunikationsgerät handelt es sich beispielsweise um eine technische Anlage oder Einrichtung, die zur Erfassung, Eingabe, Übermittlung und Ausgabe von Informationen oder Signalen oder Daten dient. Die Informationen oder Signale oder Daten, welche übermittelt werden sollen, können beispielsweise Sprachdaten sein, wobei die vorliegende Erfindung nicht auf diese Art der Informationen beschränkt ist.

Bei einem Kommunikationsgerät kann es sich um stationär, also lokal beschränkt verwendete Geräte, wie ein Festnetztelefon, ein Faxgerät, einen Personal Computer, eine Servereinrichtung, ein Internetrouter oder ein Internetmodem der dergleichen handeln. Ein Kommunikationsgerät kann aber auch ein mobiles Gerät sein, wie beispielsweise ein Mobiltelefon, ein tragbarer Computer, ein Netbook, ein Notebook, ein Navigationsgerät, ein Personal Digital Assistant oder dergleichen. Die vorliegende Erfindung ist somit nicht auf ein bestimmtes Kommunikationsgerät beschränkt.

Bei einer Schnittstelle, die auch als Interface bezeichnet werden kann, handelt es sich um einen Teil eines Systems, welcher für die Kommunikation, also den Austausch von Informationen oder Daten zwischen zwei Kommunikationsbeteiligten verwendet wird. Die Schnittstelle kann vorzugsweise in einer wie weiter oben beschriebenen Weise ausgebildet sein und funktionieren.

Mittels der Schnittstelle kann eine - insbesondere wie weiter oben beschriebene - Kommunikationsverbindung aufgebaut werden.

Bei der externen Konfigurationsrechnereinheit handelt es sich vorzugsweise um eine - insbesondere wie weiter oben beschriebene - lokal von dem Kommunikationsgerät getrennte technische Anlage, in der Informationen beziehungsweise Daten für die Konfiguration des Kommunikationsgerätes hinterlegt sind.

Als Identifikationsdaten, die zur Identifikation oder Identifizierung des Kommunikationsgerätes dienen.. Die Identifikationsdaten können wie weiter oben beschrieben ausgestaltet sein.

Neben Identifikationsdaten zum Authentifizieren des Kommunikationsgerätes bei der externen Konfigurationsrechnereinheit verwendet werden, werden Konfigurationsdaten von der externen Konfigurationsrechnereinheit an das Kommunikationsgerät übertragen und dort empfangen. Bei den Konfigurationsdaten handelt es sich - wie oben beschrieben - um Daten mit denen das Kommunikationsgerät derart konfiguriert werden kann, damit das Kommunikationsgerät verwendet werden kann.

Erfindungsgemäß ist dem Kommunikationsgerät weiterhin eine - wie weiter oben beschrieben - Chipkarte zugeordnet.

In weitere Ausgestaltung sind der Chipkarte zu deren Identifikation wenigstens zwei unterschiedliche chipkartenbezogene Identifikationsmerkmale zugeordnet, und das Kommunikationsgerät ist ausgebildet, dass die wenigstens zwei unterschiedlichen chipkartenbezogenen Identifikationsmerkmale als Identifikationsdaten von dem Kommunikationsgerät über die Schnittstelle an die externe Konfigurationsrechnereinheit übertragen werden oder werden können.

Bei den zwei unterschiedlichen chipkartenbezogenen Identifikationsmerkmalen handelt es sich um die - wie weiter oben beschriebenen - chipkartenbezogenen Identifikationsmerkmale. Bei den chipkartenbezogenen Identifikationsmerkmalen handelt es sich um die IMSI und um die PIN, wobei als PIN auch die SuperPIN verwendet werden kann.

Bevorzugt weist das Kommunikationsgerät Mittel zur Durchführung des oben beschriebenen Verfahrens auf, so dass hinsichtlich der Ausgestaltung und Funktionsweise des Kommunikationsgeräts auf die vorstehenden Ausführungen zu den Verfahrensaspekten vollinhaltlich Bezug genommen und verwiesen wird.

Unter Bezugnahme der vorstehenden Ausführungen lässt sich die vorliegende Erfindung insbesondere auch wie folgt beschreiben.

Bei der Authentifizierung von Kommunikationsgeräten an einer externen Konfigurationsrechnereinheit, die ein ACS (Auto-Configuration Server) sein kann, stellt sich regelmäßig das Thema der sicheren Authentifizierung, da ein ACS in der Regel beliebig aus dem Internet erreichbar ist und dort sensible Kundendaten wie VoIP Zugangsdaten abgelegt sind, die vor Missbrauch geschützt werden müssen. Andererseits soll die Konfiguration des Kommunikationsgerätes für den Kunden einfach und sicher sein. Für die Authentifizierung von Kommunikationsgeräten können Chipkarten in Form von Standard SIM-Karten verwendet werden, für die der Kunde nur die PIN und die SuperPIN (PUK) kennt.

Dies kann bei Festnetzgeräten, wie beispielsweise einem DSL- oder VoIP-Router automatisch erfolgen. Im Mobilfunk werden derzeit noch nicht Kommunikationsgeräte aus dem Netz über eine externe Konfigurationsrechnereinheit ferngesteuert konfiguriert. Im Falle von zum Beispiel VoIP Nutzung ist das aber sehr sinnvoll, mehrere kundenindividuelle Daten sicher auf dem Kommunikationsgerät zu konfigurieren. Damit kann Missbrauch vermieden oder ein Vergessen oder Verlieren von wichtigen Zugangsdaten vom Nutzer verhindert werden. Ziel ist es, dass der Nutzer ausschließlich seine Chipkarte hat und die zugehörige PIN und SuperPIN (PUK) kennt - wie schon heute im Mobilfunk üblich - und damit eine VoIP Zugangsdaten oder eine individuelle Konfiguration des Kommunikationsgeräts von der externen Konfigurationsrechnereinheit erhält.

Es wird eine Lösung mit Chipkarten in Form von Standard SIM-Karten bereitgestellt, ohne dass ein individueller Zahlencode zusätzlich auf der Chipkarte gespeichert werden muss. Die Lösung beschreibt zudem, wie ein Nutzer mit Hilfe einer Chipkarte einen Festnetz oder LTE Sprach (VoIP) - und Internet-Anschluss konfigurieren oder installieren kann. Der Kunde muss dafür nur die PIN und/oder SuperPIN (PUK) der Chipkarte angeben.

Es wird die Möglichkeit beschrieben, mit Hilfe einer Chipkarte ein Mobilfunk- oder Festnetz Kommunikationsgerät mit individuellen sensiblen Konfigurationsdaten wie beispielsweise VoiP Zugangsdaten automatisch und userfreundlich zu konfigurieren. Dazu wird eine externe Konfigurationsrechnereinheit, ein ACS im IP-Netzwerk verwendet, der als Kundenreferenz Informationen einer Chipkarte, beispielsweise IMSI und SuperPIN (PUK), benutzt. Das Kommunikationsgerät sendet die Informationen der Chipkarte zur Authentifizierung an die externe Konfigurationsrechnereinheit und erhält daraufhin die individuellen Konfigurationsdaten des Kommunikationsgerätes.

Werden nun auf der externen Konfigurationsrechnereinheit für die individuelle Konfiguration des Kommunikationsgeräts, beispielsweise VoIP Zugangsdaten, zusätzlich eindeutige Identifikationsmerkmale der SIM-Karte hinterlegt, so kann ein automatischer Authentifizierungsmechanismus zwischen Kommunikationsgerät mit Chipkarte und der externen Konfigurationsrechnereinheit über eine Kommunikationsverbindung aufgebaut und die Konfiguration des Kommunikationsgeräts vollautomatisch erfolgen.

Aus der Chipkarte kann das Kommunikationsgerät Daten auslesen, die die Chipkarte eindeutig identifizieren. Dazu gehört beispielsweise die IMSI.

Sobald die individuellen Konfigurationsdaten auf dem Kommunikationsgerät konfiguriert sind, kann das Kommunikationsgerät einen VoIP Gesprächsaufbau über die VoIP Plattform im Netz vollziehen und damit beliebige Telefongespräche für die im zugewiesenen VoIP Accounts im Festnetz oder anderen Mobilen Netzwerken tätigen.

Die Erfindung wird nun anhand von Ausführungsbeispielen unter Bezugnahme auf die beiliegenden Zeichnungen näher erläutert. Es zeigen
- Figur 1: in schematischer Darstellung die Vorgehensweise zur erfindungsgemäßen Konfiguration eines Kommunikationsgeräts;
- Figur 2: eine Übersicht über verschiedene mögliche Vorgehensweisen zur Konfiguration eines Kommunikationsgerätes und den bestimmungsgemäßen Einsatz eines entsprechend konfigurierten Kommunikationsgeräts.

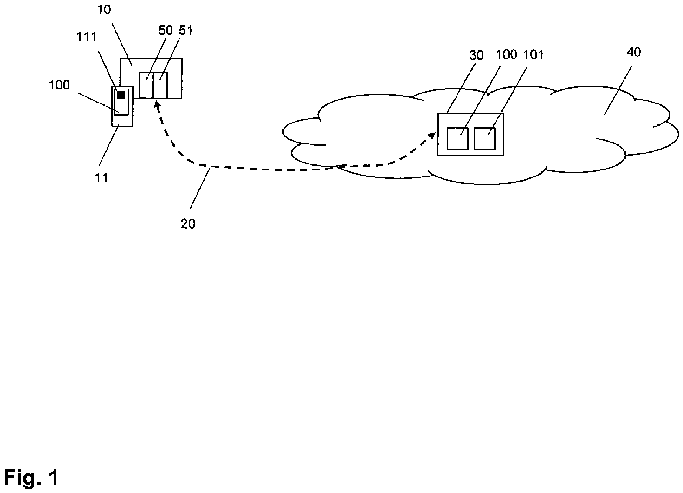

In Figur 1 ist in schematischer Darstellung die Vorgehensweise zur erfindungsgemäßen Konfiguration eines Kommunikationsgeräts 10 dargestellt.

Das Kommunikationsgerät 10 weist eine Schnittstelle 50 zum Übertragen von Identifikationsdaten 100 auf, die zur Authentifizierung des Kommunikationsgeräts 10 dienen. Weiterhin weist das Kommunikationsgerät 10 eine Schnittstelle 51 zum Empfangen von Konfigurationsdaten 101 sowie eine Chipkarte 11 auf. Auf der Chipkarte 11 sind chipkartenbezogene Identifikationsmerkmale 111 gespeichert.

Zur Konfiguration des Kommunikationsgerätes 10 müssen verschiedene Einstellungen und Veränderungen von Parametern im Kommunikationsgerät 10 vorgenommen werden. Die dafür erforderlichen Konfigurationsdaten 101 sind in einer externen Konfigurationsrechnereinheit 30 gespeichert.

Zur Authentifizierung des Kommunikationsgeräts 10, welches ein Mobiltelefon oder ein DSL- oder VoIP-Router oder Modem und dergleichen sein kann, werden die chipkartenbezogenen Identifikationsmerkmale 111, welche auf der Chipkarte 11 gespeichert sind, als Identifikationsdaten 100 verwendet. Bei der Chipkarte 11 handelt es um eine SIM-Karte.

Dafür muss das Kommunikationsgerät 10 eine Aufnahme für eine Chipkarte 11 aufweisen, um Daten, beispielsweise die Identifikationsdaten 100 beziehungsweise die chipkartenbezogenen Identifikationsmerkmale 111, der Chipkarte 11 auslesen zu können. Im Netzwerk 40 werden Identifikationsdaten 100, beispielsweise die chipkartenbezogenen Identifikationsmerkmale 111 der Chipkarte 11, zusammen mit Konfigurationsdaten 101, welche beispielsweise VoIP Zugangsdaten sein können auf der externen Konfigurationsrechnereinheit 30 gespeichert. Bei der externen Konfigurationsrechnereinheit 30 kann es sich um einen Auto-Configuration Server (ACS) handeln.

Vorzugsweise werden zwei unterschiedliche Typen chipkartenbezogener Identifikationsmerkmale 111 als Identifikationsdaten 100 übertragen. Die auf der Chipkarte 11 gespeicherten chipkartenbezogenen Identifikationsmerkmale 111 können die IMSI und die SuperPIN (PUK) sein.

Wenn das Kommunikationsgerät 10 die chipkartenbezogenen Identifikationsmerkmale 111, beispielsweise IMSI zusammen mit der SuperPIN (PUK), als Identifikationsdaten 100 zur externen Konfigurationsrechnereinheit 30 sendet, was über eine Kommunikationsverbindung 20, insbesondere eine Datenverbindung, erfolgt, und wenn die externe Konfigurationsrechnereinheit 30 zu diesen Identifikationsdaten 100 die entsprechenden Konfigurationsdaten 101, beispielsweise VoIP Zugangsdaten hinterlegt hat, so kann das Kommunikationsgerät 10 nach erfolgter Authentifizierung mittels der Konfigurationsdaten 101 automatisch konfiguriert werden. Die Authentifizierung kann beispielsweise erfolgen, indem die vom Kommunikationsgerät 10 übertragenen Identifikationsdaten 100 mit den in der externen Konfigurationsrechnereinheit 30 gespeicherten Identifikationsdaten 100 verglichen werden. Für eine erfolgreiche Authentifizierung ist erforderlich, dass die übertragenen Identifikationsdaten 100 und die gespeicherten Identifikationsdaten 100 übereinstimmen.

Beispielsweise kann vorgesehen sein, dass in der externen Konfigurationsrechnereinheit 30 Identifikationsdaten 100 gespeichert sind, die mit Konfigurationsdaten 101 verknüpft sind.

Die Konfigurationsdaten 101 werden von der externen Konfigurationsrechnereinheit 30 über die Kommunikationsverbindung 20 an das Kommunikationsgerät 10 gesendet. Dort können die Konfigurationsdaten 101 über die Schnittstelle 51 in das Kommunikationsgerät 10 aufgenommen werden, wobei auch denkbar ist, dass zum Senden und Empfangen der Identifikationsdaten 100 und der Konfigurationsdaten 101 nur eine Schnittstelle verwendet wird.

Die Kombination von IMSI und SuperPIN (PUK) ist hier nur beispielhaft als Identifikationsdaten 100 genannt und kann sowohl für Mobilfunk- als auch für Festnetz- Kommunikationsgeräte 10 verwendet werden.

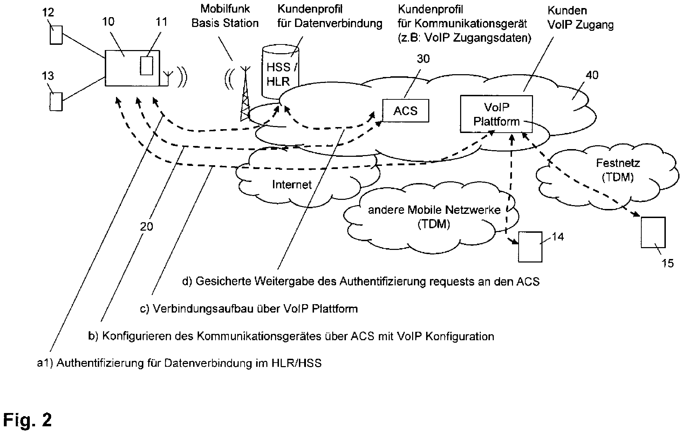

In Figur 2 ist eine Übersicht über verschiedene mögliche Vorgehensweisen zur Konfiguration eines Kommunikationsgerätes 10 und den bestimmungsgemäßen Einsatz eines entsprechend konfigurierten Kommunikationsgeräts 10 dargestellt.

Für die Konfiguration des Kommunikationsgeräts 10 ist zunächst eine Authentifizierung des Konfigurationsgeräts 10 erforderlich, wobei die Authentifizierung sowie die Konfiguration des Kommunikationsgeräts 10, wie bereits in Figur 1, beschrieben erfolgen kann, so dass auf Figur 1 verwiesen wird.

Es ist jedoch auch eine Konfiguration des Kommunikationsgeräts 10 möglich, wie nachfolgend beschrieben. Dabei wird eine Authentifizierung über Datenverbindung im HLR / HSS gemäß a) in Verbindung mit einer gesicherten Weitergabe des Authentifizierungsrequests an den ACS gemäß d) verwendet.

Wenn es sich bei dem Kommunikationsgerät 10 beispielsweise um ein Mobiltelefon handelt, so kann die Authentifizierung des Kommunikationsgeräts 10 mit einer Authentifizierung über eine Datenverbindung im Home Location Register (HLR) / Subscriber Server (HSS) erfolgen. Zur Authentifizierung des Kommunikationsgeräts 10 kann über eine drahtlose Verbindung über Mobilfunk Basis Stationen ein Kundenprofil für eine Datenverbindung auf dem HLR / HSS gespeichert sein und eine standardisierte Anmeldung des Kommunikationsgerät 10 in dem Netzwerk 40 erfolgen. Zur Konfiguration des Kommunikationsgeräts 10 wäre bei einer solchen Vorgehensweise eine Kopplung der Authentifizierung im Home Location Register (HLR) / Home Subscriber Server (HSS) mit der Authentifizierung in der externen Konfigurationsrechnereinheit 30, beispielsweise dem ACS, erforderlich, um die VoIP Konfiguration vom ACS zu laden. Dies erfolgt über eine gesicherte Weitergabe des Authentifizierungsrequests an den ACS. Dafür darf der ACS allerdings ausschließlich über solche Authentifizierungsrequests erreichbar sein und nicht über andere Internetzugänge, um einen Missbrauch vorzubeugen. Dies ist jedoch nicht praktikabel.

Wie bereits in Figur 1 beschrieben, kann die Authentifizierung des Kommunikationsgeräts 10 mittels Authentifizierung über die ACS mit VoIP Konfiguration b) erfolgen. Bei einer solchen Authentifizierung des Kommunikationsgeräts 10 mittels einer Chipkarte 11 wird eine Kommunikationsverbindung 20 zwischen dem Kommunikationsgerät 10 und der externen Konfigurationsrechnereinheit 30, welche einen ACS darstellen kann, aufgebaut. Diese Vorgehensweise wurde bereits in Figur 1 beschrieben, so dass an dieser Stelle vollinhaltlich auf Figur 1 verwiesen wird.

Bei dem bestimmungsgemäßen Einsatz eines entsprechend konfigurierten Kommunikationsgeräts 10, kann das Kommunikationsgerät 10 einen DSL- oder VoIP-Router darstellen. An einen solchen Router kann ein Telefon 12 oder ein Computer 13 angeschlossen sein. Nach der Konfiguration des Kommunikationsgeräts 10 gemäß den Ausführungen aus Figur 1 kann mit dem Kommunikationsgerät 10 ein VoIP Verbindungsaufbau über eine VoIP Plattform c) zwischen dem Telefon 12 oder dem Computer 13 und anderen Kommunikationsgeräten 14, 15 erfolgen. Bei diesem Verbindungsaufbau kann nach der Konfiguration des Kommunikationsgeräts 10 eine Verbindung über eine VoIP Plattform mittels Kunden VoIP Zugang mit anderen Mobilen Netzwerken (TDM) oder einem anderen Festnetz (TDM) aufgebaut werden. Dem anderen Mobilen Netzwerk kann ein Mobiltelefon 14, dem Festnetz ein Festnetztelefon 15 zugeordnet sein, so dass eine Kommunikationsverbindung zwischen dem Telefon 12 oder dem Computer 13 und dem Mobiltelefon 14 oder dem Festnetztelefon 15 über das Kommunikationsgerät 10 hergestellt werden kann.

## Patentansprüche

1. Verfahren zum Konfigurieren eines Kommunikationsgerätes (10), wobei bestimmte Anpassungen des Kommunikationsgerätes (10) vorgenommen werden, **gekennzeichnet durch** folgende Schritte:
- eine Kommunikationsverbindung (20) wird von dem Kommunikationsgerät (10) zu einem externen Auto-Configuration-Server (30) hergestellt;
- Identifikationsdaten (100), die auf das Kommunikationsgerät (10) bezogen sind, werden zum Zwecke der Authentifizierung des Kommunikationsgeräts (10) von dem Kommunikationsgerät (10) an den externen Auto-Configuration-Server (30) übertragen, wobei als Identifikationsdaten (100) chipkartenbezogene Identifikationsmerkmale (111) übertragen werden, wobei die chipkartenbezogenen Identifikationsmerkmale (111) einer Chipkarte (11) zu deren Identifikation zugeordnet sind, wobei die Chipkarte (11) dem Kommunikationsgerät (10) zugeordnet ist, wobei die Chipkarte (11) als eine SIM-Karte ausgebildet ist, wobei der Chipkarte (11) als chipkartenbezogenes Identifikationsmerkmal (111) eine International Mobile Subscriber Identification zugeordnet ist, wobei der Chipkarte (11) als chipkartenbezogenes Identifikationsmerkmal (111) eine chipkartenbezogene PIN, insbesondere eine SuperPIN, zugeordnet ist, und wobei die International Mobile Subscriber Identification und die chipkartenbezogene PIN als Identifikationsdaten(100) in Form von zwei unterschiedlichen chipkartenbezogenen Identifikationsmerkmalen von dem Kommunikationsgerät (10) an den externen Auto-Configuration-Server (30) übertragen werden;
- in dem externen Auto-Configuration-Server (30) werden die übertragenen Identifikationsdaten (100) authentifiziert, indem zur Authentifizierung von dem Auto-Configuration-Server (30) die übertragenen Identifikationsdaten (100) mit im Auto-Configuration-Server (30) gespeicherten Identifikationsdaten verglichen werden, indem im Auto-Configuration-Server (30) geprüft wird, inwieweit die übertragenen Identifikationsdaten den gespeicherten Identifikationsdaten entsprechen, wobei die gespeicherten Identifikationsdaten mit Konfigurationsdaten (101), welche in dem Auto-Configuration-Server (30) abgespeichert sind, verknüpft sind;
- bei erfolgreicher Authentifizierung wird eine Konfiguration des Kommunikationsgeräts (10) durchgeführt, derart, dass bei Übereinstimmung der übertragenen Identifikationsdaten (100) mit den gespeicherten Identifikationsdaten die mit den gespeicherten Identifikationsdaten verknüpften Konfigurationsdaten (101) von dem externen Auto-Configuration-Server (30) automatisch zu dem Kommunikationsgerät (10) übertragen, dort empfangen und auf dem Kommunikationsgerät (10) konfiguriert werden.

2. Verfahren nach Anspruch 1, **dadurch gekennzeichnet, dass** dieses zum Konfigurieren eines Kommunikationsgeräts (10) in Form eines Mobiltelefons, insbesondere eines LTE-Mobiltelefons ausgebildet ist und/oder dass dieses zum Konfigurieren eines Kommunikationsgeräts (10) in Form eines Festnetzgerätes, insbesondere eines DSL- oder VoIP-Geräts ausgebildet ist und/oder dass dieses zum Konfigurieren eines Kommunikationsgeräts (10) für den VoIP-Betrieb ausgebildet ist.

3. Verfahren nach einem der Ansprüche 1 oder 2, **dadurch gekennzeichnet, dass** das Kommunikationsgerät (10) eine Schnittstelle (50) zur Herstellung einer Kommunikationsverbindung (20) in Form einer Datenverbindung zwischen dem Kommunikationsgerät (10) und dem externen Auto-Confguration-Server (30) aufweist, oder dass eine Kommunikationsverbindung (20) in Form einer Datenverbindung zwischen dem Kommunikationsgerät (10) und dem externen Auto-Configuration-Server (30) hergestellt wird.

4. Verfahren nach einem der Ansprüche 1 bis 3, **dadurch gekennzeichnet, dass** die chipkartenbezogenen Identifikationsmerkmale (111), die als Identifikationsdaten (100) übertragen werden, vom Kommunikationsgerät (10) aus der Chipkarte (11) ausgelesen werden.

5. Kommunikationsgerät (10), aufweisend eine Schnittstelle (50) zur Herstellung einer Kommunikationsverbindung (20) von dem Kommunikationsgerät (10) zu einem externen Auto-Configuration-Server (30), aufweisend eine Schnittstelle (51) zum Empfangen von Konfigurationsdaten (101) von dem externen Auto-Configuration-Server (30), aufweisend Identifikationsdaten (100), die auf das Kommunikationsgerät (10) bezogen sind und die über die Schnittstelle (50) von dem Kommunikationsgerät (10) an den externen Auto-Configuration,Server (30) übertragbar sind, **dadurch gekennzeichnet, dass** dem Kommunikationsgerät (10) eine Chipkarte (11) zugeordnet ist, dass der Chipkarte (11) zu deren Identifikation chipkartenbezogene Identifikationsmerkmale (111) zugeordnet sind, dass das Kommunikationsgerät (10) ausgebildet ist, dass chipkartenbezogene Identifikationsmerkmale (111) als Identifikationsdaten (100) von dem Kommunikationsgerät (10) über die Schnittstelle (50) an den externen Auto-Configuration-Server (30) übertragen werden, wobei die Chipkarte (11) als eine SIM-Karte ausgebildet ist, wobei der Chipkarte (11) als chipkartenbezogenes Identifikationsmerkmal (111) eine International Mobile Subscriber Identification zugeordnet ist, wobei der Chipkarte (11) als chipkartenbezogenes Identifikationsmerkmal (111) eine chipkartenbezogene PIN, insbesondere eine SuperPIN, zugeordnet ist, und wobei die International Mobile Subscriber Identification und die chipkartenbezogene PIN als Identifikationsdaten (100) in Form von zwei unterschiedlichen chipkartenbezogenen Identifikationsmerkmalen von dem Kommunikationsgerät (10) an den externen Auto-Configuration-Server (30) übertragen werden, und dass die Schnittstelle (51) zum Empfangen von Konfigurationsdaten (101), welche in dem Auto-Configuration-Server (30) abgespeichert und mit in dem Auto-Configuration-Server (30) gespeicherten Identifikationsdaten verknüpft sind, ausgebildet ist, derart, dass bei Übereinstimmung der übertragenen Identifikationsdaten (100) mit den gespeicherten Identifikationsdaten die mit den gespeicherten Identifikationsdaten verknüpften Konfigurationsdaten (101) von dem externen Auto-Configuration-Server (30) automatisch zu dem Kommunikationsgerät (10) übertragen, dort empfangen und auf dem Kommunikationsgerät (10) konfiguriert werden.

6. Kommunikationsgerät (10) nach Anspruch 5, **dadurch gekennzeichnet, dass** dieses Mittel zur Durchführung des Verfahrens nach einem der Ansprüche 1 bis 4 aufweist.

## Claims

1. A method for configuring a communication device (10), whereby specific adaptions of the communication device (10) are performed, **characterized by** the following steps:
- A communication link (20) is established from the communication device (10) to an external auto-configuration-server (30);
- Identification data (100), which are related to the communication device (10), are transmitted from the communication device (10) to the external auto-configuration-server (30) for the purpose of authentication of the communication device (10), whereby chip card related identification features (111) are transmitted as identification data (100), whereby the chip card related identification features (111) are assigned to a chip card (11) for the identification thereof, whereby the chip card (11) is assigned to the communication device (10), whereby the chip card (11) is provided as a SIM-card, whereby an International Mobile Subscriber Identification is assigned to the chip card (11) as a chip card related identification feature (111), whereby a chip card related PIN, in particular a super PIN, is assigned to the chip card (11) as a chip card related identification feature (111), and whereby the International Mobile Subscriber Identification and the chip card related PIN are transmitted from the communication device (10) to the external auto-configuration-server (30) as identification data (100) in form of two different chip card related identification features,
- The transmitted identification data (100) are authenticated in the external auto-configuration-server (30), while for the authentication the transmitted identification data (100) are compared by the auto-configuration-server (10) with identification data being stored in the auto-configuration-server (30), while it is checked in the auto-configuration-server (30), to which extent the transmitted identification data match with the stored identification data, whereby the stored identification data are linked to configuration data (101), which are stored in the auto-configuration-server (30);
- Upon a successful authentication a configuration of the communication device (10) is performed in such a way, that upon a match of the transmitted identification data (100) with the stored identification data the configuration data (101) being linked to the stored identification data are automatically transmitted from the auto-configuration-server (30) to the communication device (10), are received there and are configured on the communication device (10).

2. The method according to claim 1, **characterized in that** the method is provided for configuring a communication device (10) in form of a mobile phone, in particular an LTE mobile phone and/or that the method is provided for configuring a communication device (10) in form of a fixed network device, in particular a DSL or a VoIP device and/or that the method is provided for configuring a communication device (10) for the VoIP service.

3. The method according to one of claims 1 or 2, **characterized in that** the communication device (10) comprises an interface (50) for establishing a communication link (20) in form of a data link between the communication device (10) and the external auto-configuration-server (30), or that a communication link (20) in form of a data link is established between the communication device (10) and the external auto-configuration-server (30).

4. The method according to anyone of claims 1 to 3, **characterized in that** the chip card related identification features (111), which are transmitted as identification data (100), are read out from the communication device (10) out of the chip card (11).

5. A communication device (10), comprising an interface (50) for establishing a communication link (20) from the communication device (10) to an external auto-configuration-server (30), comprising an interface (51) for receiving configuration data (101) from the external auto-configuration-server (30), comprising identification data (100), which are related to the communication device (10) and which are transmittable from the communication device (10) to the external auto-configuration-server (30) via interface (50), **characterized in that** a chip card (11) is assigned to the communication device (10), that chip card related identification features (111) are assigned to the chip card (11) for the identification thereof, that the communication device (10) is provided such, that chip card related identification features (111) as identification data (100) are transmitted from the communication device (10) to the external auto-configuration-server (30) via interface (50), whereby the chip card (11) is provided as a SIM-card, whereby an International Mobile Subscriber Identification is assigned to the chip card (11) as a chip card related identification feature (111), whereby a chip card related PIN, in particular a super PIN, is assigned to the chip card (11) as a chip card related identification feature (111), and whereby the International Mobile Subscriber Identification and the chip card related PIN are transmitted from the communication device (10) to the external auto-configuration-server (30) as identification data (100) in form of two different chip card related identification features, and that interface (51) is provided for receiving configuration data (101) which are stored in the auto-configuration-server (30) and which are linked to identification data being stored in the auto-configuration-server (30), such that upon a match of the transmitted identification data (100) with the stored identification data the configuration data (101) being linked to the stored identification data are automatically transmitted from the auto-configuration-server (30) to the communication device (10), are received there and are configured on the communication device (10).

6. The communication device (10) according to claim 5, **characterized in that** it comprises means for performing the method according to anyone of claims 1 to 4.

## Revendications

1. Procédé servant à configurer un appareil de communication (10), dans lequel des adaptations définies de l'appareil de communication (10) sont entreprises, **caractérisé par** des étapes qui suivent :
- une liaison de communication (20) est établie par l'appareil de communication (10) avec un serveur de configuration automatique (30) externe ;
- des données d'identification (100), qui se rapportent à l'appareil de communication (10), sont transmises, aux fins de l'authentification de l'appareil de communication (10), par l'appareil de communication (10) au serveur de configuration automatique (30) externe, dans lequel des caractéristiques d'identification (111) se rapportant aux cartes à puce sont transmises en tant que données d'identification (100), dans lequel les caractéristiques d'identification (111) se rapportant aux cartes à puce sont associées à une carte à puce (11) aux fins de l'identification de cette dernière, dans lequel la carte à puce (11) est associée à l'appareil de communication (10), dans lequel la carte à puce (11) est réalisée sous la forme d'une carte SIM, dans lequel une identification d'abonné mobile international est associée à la carte à puce (11) en tant que caractéristique d'identification (111) se rapportant à la carte à puce (11), dans lequel un PIN se rapportant à la carte à puce (11), en particulier un superPIN, est associé à la carte à puce (11) en tant que caractéristique d'identification (111) se rapportant à la carte à puce, et dans lequel l'identification d'abonné mobile international et le PIN se rapportant à la carte à puce sont transmis en tant que données d'identification (100) sous la forme de deux caractéristiques d'identification se rapportant à la carte à puce différentes, par l'appareil de communication (10) au serveur de configuration automatique (30) externe ;
- les données d'identification (100) transmises sont authentifiées dans le serveur de configuration automatique (30) externe en ce que les données d'identification (100) transmises sont comparées aux données d'identification mémorisées dans le serveur de configuration automatique (30) aux fins de l'authentification du serveur de configuration automatique (30) en ce qu'on vérifie dans le serveur de configuration automatique (30) dans quelle mesure les données d'identification transmises correspondent aux données d'identification mémorisées, dans lequel les données d'identification mémorisées sont combinées aux données de configuration (101), qui sont enregistrées dans le serveur de configuration automatique (30) ;
- en cas d'authentification réalisée avec succès, une configuration de l'appareil de communication (10) est exécutée de telle manière qu'en cas de concordance des données d'identification (100) transmises et des données d'identification mémorisées, les données de configuration (101) combinées aux données d'identification mémorisées sont automatiquement transmises à l'appareil de communication (10) par le serveur de configuration automatique (30) externe, sont reçues par ce dernier et sont configurées sur l'appareil de communication (10).

2. Procédé selon la revendication 1, **caractérisé en ce que** ledit procédé est réalisé afin de configurer un appareil de communication (10) sous la forme d'un téléphone mobile, en particulier d'un téléphone mobile LTE, et/ou **en ce que** ledit procédé est réalisé afin de configurer un appareil de communication (10) sous la forme d'un appareil de réseau fixe, en particulier d'un appareil DSL ou VoIP, et/ou **en ce que** ledit procédé est réalisé afin de configurer un appareil de communication (10) pour le mode VoIP.

3. Procédé selon l'une quelconque des revendications 1 ou 2, **caractérisé en ce que** l'appareil de communication (10) présente une interface (50) servant à établir une liaison de communication (20) sous la forme d'une liaison de données entre l'appareil de communication (10) et le serveur de configuration automatique (30) externe, ou **en ce qu'**une liaison de communication (20) est établie sous la forme d'une liaison de données entre l'appareil de communication (10) et le serveur de configuration automatique (30) externe.

4. Procédé selon l'une quelconque des revendications 1 à 3, **caractérisé en ce que** les caractéristiques d'identification (111) se rapportant à la carte à puce, lesquelles sont transmises sous la forme de données d'identification (100), sont lues par l'appareil de communication (10) depuis la carte à puce (11).

5. Appareil de communication (10), présentant une interface (50) servant à établir une liaison de communication (20) entre l'appareil de communication (10) et un serveur de configuration automatique (30) externe, présentant une interface (51) servant à recevoir des données de configuration (101) provenant du serveur de configuration automatique (30) externe, présentant des données d'identification (100), qui se rapportent à l'appareil de communication (10) et qui peuvent être transmises, par l'intermédiaire de l'interface (50), par l'appareil de communication (10) au serveur de configuration automatique (30) externe, **caractérisé en ce qu'**une carte à puce (11) est associée à l'appareil de communication (10), **en ce que** des caractéristiques d'identification (111) se rapportant à la carte à puce sont associées à la carte à puce (11) aux fins de l'identification de cette dernière, **en ce que** l'appareil de communication (10) est réalisé de telle manière que des caractéristiques d'identification (111) se rapportant à la carte à puce sont transmises sous la forme de données d'identification (100) par l'appareil de communication (10) par l'intermédiaire de l'interface (50) au serveur de configuration automatique (30) externe, dans lequel la carte à puce (11) est réalisée sous la forme d'une carte SIM, dans lequel une identification d'abonné mobile international est associée à la carte à puce (11) en tant que caractéristique d'identification (111) se rapportant à la carte à puce, dans lequel un PIN se rapportant à la carte à puce, en particulier un superPIN, est associé à la carte à puce (11) en tant que caractéristique d'identification (111) se rapportant à la carte à puce, et dans lequel l'identification d'abonné mobile international et le PIN se rapportant à la carte à puce sont transmis en tant que données d'identification (100) sous la forme de deux caractéristiques d'identification se rapportant à la carte à puce différentes, par l'appareil de communication (10) au serveur de configuration automatique (30) externe, et **en ce que** l'interface (51) est réalisée afin de recevoir des données de configuration (101), qui sont enregistrées dans le serveur de configuration automatique (30) et qui sont combinées aux données d'identification mémorisées dans le serveur de configuration automatique (30) de telle manière qu'en cas de concordance des données d'identification (100) transmises et des données d'identification mémorisées, les données de configuration (101) combinées aux données d'identification mémorisées sont automatiquement transmises par le serveur de configuration automatique (30) externe à l'appareil de communication (10), sont reçues par ce dernier et sont configurées sur l'appareil de communication (10).

6. Appareil de communication (10) selon la revendication 5, **caractérisé en ce que** ce dernier présente des moyens servant à l'exécution du procédé selon l'une quelconque des revendications 1 à 4.
